# EUROPEAN PATENT APPLICATION

(11) **EP 4 660 031 A1**
(43) Date of publication of application: **10.12.2025**
(21) Application number: 25176282.9
(22) Date of filing: 14.05.2025
(51) Int. Cl.: B60T 17/08

(54) **DIVIDER ARRANGEMENT FOR A SPRING BRAKE ACTUATOR FOR A PNEUMATIC BRAKING SYSTEM FOR A VEHICLE, IN PARTICULAR UTILITY VEHICLE**

(30) Priority: 06.06.2024 IN 202411044046
(71) Applicant: ZF CV Systems Europe BV, 1170 Brüssel (BE)
(72) Inventor: MUTHURAJ, Ganesh Kumar, 625214 Madurai (IN); ARANGARASAN, Senthil Kumar, 600095 Chennai (IN); PREM KUMAR, Pratheesh Kumar, 641014 Coimbatore (IN)
(74) Representative: Rabe, Dirk-Heinrich

(57) **Abstract**

Divider arrangement (100) for a spring brake actuator (250) for a pneumatic braking system (210) for a vehicle (200a), in particular utility vehicle (200b); wherein the spring brake actuator (250) comprises a parking brake pressure chamber (251), a service brake non-pressure chamber (252), a service brake pressure chamber (256) and a diaphragm (253) to separate the service brake non-pressure chamber (252) from the service brake pressure chamber (256); the divider arrangement (100) comprises an annular shaped divider (110) and a support member (120); the divider (110) is adapted to receive the diaphragm (253) and to divide the parking brake pressure chamber (251) and the service brake pressure chamber (256) from each other; the divider (110) is made of plastics; and the support member (120) is arranged and adapted to mechanically and/or structurally support the divider (110).

## Description

The disclosure relates to a divider arrangement for a spring brake actuator for a pneumatic braking system for a vehicle, in particular utility vehicle; wherein the spring brake actuator comprises a parking brake pressure chamber, a service brake non-pressure chamber, a service brake pressure chamber and a diaphragm to separate the service brake non-pressure chamber from the service brake pressure chamber. The disclosure also relates to a cylinder assembly for a spring brake actuator, to a spring brake actuator for a pneumatic braking system, to a pneumatic braking system for a vehicle, in particular utility vehicle, and to a vehicle, in particular utility vehicle.

Braking systems, such as air brake systems, are used to control the movement of vehicles, in particular utility vehicles, in a safe and effective manner. In particular, pneumatic brakes are used on utility vehicles such as trucks, trailers, and buses, which typically have large gross vehicle weights. The inertial mass of these vehicles, in combination with the speeds at which they might travel, requires a braking arrangement which responds rapidly with appropriate braking power. One system component of a pneumatic brake arrangement is a spring brake actuator. The spring brake actuator typically provides the necessary force when braking the vehicle.

EP 4 015 323 A2 discloses a spring brake actuator for use in a commercial vehicle, said actuator comprising a service brake and a spring brake portion, said spring brake portion having a housing comprising a first end being proximal to the service brake, a wall section extending from the first end, a second end being distal to the service brake, and a locking mechanism for locking the ends to the wall section. The locking mechanism is arranged between the wall section and the second end of said housing. The service brake portion comprises a diaphragm acting on a service brake portion piston. Pressurized air is introduced in the service brake portion housing by means of a pressure inlet.

Typically, a spring brake actuator comprises a service brake part and parking brake part. The spring brake actuator comprises a diaphragm, a housing and a flange, typically made of aluminum. The housing, also called cylinder, forms a service brake non-pressure chamber and a service brake pressure chamber which are separated from each other by the diaphragm. A pushrod and a pushrod plate, also called piston plate, connected with the pushrod is arranged in the housing. The pressure chamber is fluidly connected to a source of pressurized air and the service brake non-pressure chamber mounts the pushrod, which is couplable to a brake arrangement. Therein, the introduction and exhaustion of pressurized air into the service brake pressure chamber reciprocates the pushrod into and out of the spring brake actuator along an axis to apply and release the operating brakes.

The flange separates the service brake part from the parking brake part. Further, the flange delimits the motion of the diaphragm, of the piston plate and thus of the pushrod.

It is an object of the present invention to provide a technological contribution and to improve at least one aspect of the prior art. In particular, an object of the invention may be to provide a spring brake actuator with a cost-efficient and efficiently manufacturable separation between different chambers and/or parts of a spring brake actuator.

The object is solved by the subject-matter according to independent claim 1 and according to the remaining independent claims. Dependent claims relate to preferred embodiments.

According to an aspect of the present disclosure, a divider arrangement for a spring brake actuator for a pneumatic braking system for a vehicle, in particular utility vehicle, is provided; wherein the spring brake actuator comprises a parking brake pressure chamber, a service brake non-pressure chamber, a service brake pressure chamber and a diaphragm to separate the service brake non-pressure chamber from the service brake pressure chamber; the divider arrangement comprises an annular shaped divider and a support member; the divider is adapted to receive the diaphragm and to divide the parking brake pressure chamber and the service brake pressure chamber from each other; the divider is made of plastics; and the support member is arranged and adapted to mechanically and/or structurally support the divider.

In other words, according to the disclosure, the divider arrangement is provided, wherein the divider arrangement may replace a flange to separate a service brake part of the spring brake actuator from the parking brake part. Therein, the divider arrangement comprises the divider and the support member. The divider may achieve a separation of the spring brake actuator from the parking brake part, and the support member may support the divider.

The divider is made of plastic. This enables an effective, versatile and cost-effective manufacturing of the divider. Furthermore, the divider may be lightweight. To achieve a sufficient mechanical robustness and/or stiffness, the support member is arranged and adapted to mechanically and/or structurally support the divider. The mechanical support of the divider by the support member may enhance the stiffness and/or robustness of the divider arrangement compared to the stiffness and/or robustness of the divider as such. The structural support of the divider by the support member may enhance structural properties of the divider arrangement compared to the divider as such.

Optionally, the support member is at least partially arranged inside the divider. The support member therefore supports the divider mechanically and structurally. Alternatively or additionally, the divider arrangement is an overmolded arrangement. An overmolded arrangement may be efficiently manufactured. Therein, the support member may be overmolded with plastic that forms the divider and thus the divider arrangement. The divider arrangement may be a single piece. This may enable an efficient mountability of the divider arrangement.

Optionally, the divider arrangement defines an axial direction; and each of the divider and the support member comprises a through hole centrally arranged with respect to the axis and for inserting a piston pipe. This enables that the divider arrangement may be used in a spring brake actuator as known in the art. The through hole of the divider and the through hole of the support member may be aligned so that a through hole of the divider arrangement is formed.

Optionally, the divider comprises a circumferentially arranged collar; and the collar comprises a plurality of circumferentially arranged fastening holes for fastening the divider to a cylinder. This enables a circumferential fastening of the divider and/or the divider arrangement to the cylinder. Therein, it is realized that the divider may not be fixated only in a form locking manner as known in the prior art, but a more reliable fixation of the divider to the cylinder may be provided by bolts and/or screws which are insertable in the fastening holes.

Optionally, the support member is made of sheet metal. Sheet metal may be particularly stiff and/or robust. Thus, the support member may improve the mechanical support of the divider arrangement. Further, sheet metal may be efficiently used to structurally support the divider.

Optionally, the divider comprises a contact surface for contacting the diaphragm with a plurality of radially extended grooves. The radially extended grooves may achieve a further reduction of weight. Alternatively or additionally, the divider comprises a lateral surface with at least one circumferentially arranged lateral groove for receiving a sealing. The at least one lateral groove may be used to receive at least one sealing. This may enhance sealingly separating the service brake part from the parking brake part and/or sealing the parking brake pressure chamber against an environment.

According to an aspect of the disclosure, a cylinder assembly for a spring brake actuator for a pneumatic braking system of a vehicle, in particular utility vehicle, is provided. The cylinder assembly comprises the divider arrangement as described above and a cylinder for a defining the parking brake pressure chamber; and the divider arrangement is arranged within the cylinder for receiving the diaphragm and for dividing the parking brake pressure chamber and the service brake pressure chamber from each other. Optionally, the divider arrangement comprises one or more features as described above as optional and/or preferred to achieve a technical effect corresponding thereto.

According to an aspect of the disclosure, a spring brake actuator for a pneumatic braking system of a vehicle, in particular utility vehicle, is provided. The spring brake actuator comprises a parking brake pressure chamber, a service brake non-pressure chamber, a service brake pressure chamber, a diaphragm to separate the service brake non-pressure chamber from the service brake pressure chamber, and the divider arrangement as described above and/or the cylinder assembly as described above. Optionally, the cylinder assembly and/or the divider arrangement comprises one or more features as described above as optional and/or preferred to achieve a technical effect corresponding thereto.

According to an aspect of the disclosure, a pneumatic braking system of a vehicle, in particular utility vehicle, is provided. The pneumatic braking system comprises the spring brake actuator as described above, the cylinder assembly as described above and/or the divider arrangement as described above. Optionally, the spring brake actuator, the cylinder assembly and/or the divider arrangement comprises one or more features as described above as optional and/or preferred to achieve a technical effect corresponding thereto.

According to an aspect of the disclosure, vehicle, in particular utility vehicle, is provided. The vehicle, in particular utility vehicle, comprises the pneumatic braking system as described above, the spring brake actuator as described above, the cylinder assembly as described above and/or the divider arrangement as described above. Optionally, the pneumatic braking system, the spring brake actuator, the cylinder assembly and/or the divider arrangement comprises one or more features as described above as optional and/or preferred to achieve a technical effect corresponding thereto.

Further advantages and technical features and their technical effects are disclosed in the figures and the description thereof.

The figures show preferred embodiments as follows:
- Fig. 1: a schematic of a vehicle, in particular utility vehicle, according to an embodiment of the disclosure;
- Fig. 2: a sectional view of a spring brake actuator;
- Fig. 3: a sectional view of a spring brake actuator according to an embodiment of the disclosure;
- Fig. 4: a sectional view of a cylinder assembly according to an embodiment of the disclosure;
- Fig. 5: a sectional exploded view of a cylinder assembly according to an embodiment of the disclosure;
- Fig. 6: a perspective view of each of a divider and a support member of a divider arrangement according to an embodiment of the disclosure; and
- Fig. 7: a sectional view of a divider arrangement according to an embodiment of the disclosure.

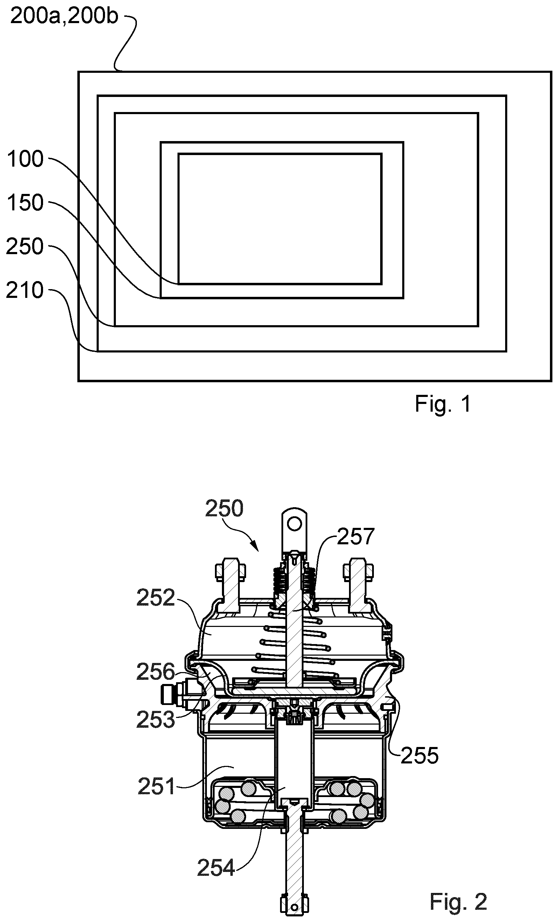

Figure 1 shows a schematic of a vehicle 200a, in particular utility vehicle 200b, according to an embodiment of the invention. In the following, the vehicle 200a, in particular utility vehicle 200b, is referred to as vehicle 200a, 200b. The vehicle 200a, 200b is a land vehicle 200a, 200b. For example, the vehicle 200a, 200b is a truck, a bus, and/or a vehicle of a vehicle combination.

The vehicle 200a, 200b comprises a pneumatic braking system 210. The pneumatic braking system 210 comprises pneumatic and optionally electric components. For example, a brake request by a driver and/or operator of the vehicle 200a, 200b may lead to a brake signal that causes a pneumatic and/or an electro-pneumatic actuation of the pneumatic braking system 210. Therein, pressurized air is provided and controlled to actuate the pneumatic braking system 210 to brake the vehicle 200a, 200b.

The pneumatic braking system 210 comprises a spring brake actuator 250. The spring brake actuator 250 comprises a cylinder assembly 150. The cylinder assembly 150 comprises a divider arrangement 100.

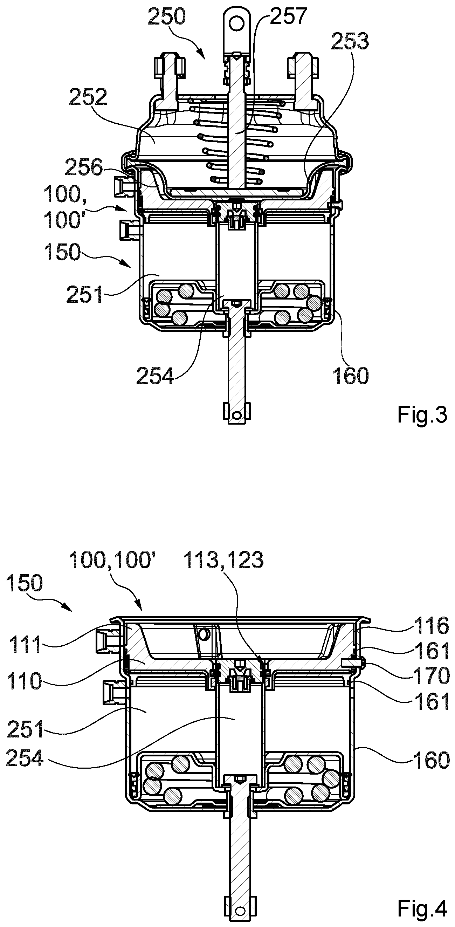

The spring brake actuator 250, the cylinder assembly 150 and the divider arrangement 100 are further described with reference to Figures 3 to 7. A spring brake actuator 250 according to the prior art is described under reference to Figure 2.

Figure 2 shows a sectional view of a spring brake actuator 250. The spring brake actuator 250 of Figure 2 is a spring brake actuator 250 as known from the prior art.

The spring brake actuator 250 comprises a parking brake pressure chamber 251, a service brake non-pressure chamber 252, a service brake pressure chamber 256, a diaphragm 253, a piston pipe 254, a flange 255 and a pushrod 257.

The spring brake actuator 250 may receive pressurized air in the service brake pressure chamber 256 via the piston pipe 254, wherein the piston pipe 254 is arranged in the parking brake pressure chamber 251. The pressurized air deflects the diaphragm 253 and a piston plate which is connected to the pushrod 257 and thus deflects the pushrod 257. The pushrod 257 is arranged in the service brake non-pressure chamber 252 and is deflected against a force of a spring (not indicated).

The flange 255 is arranged to divide the parking brake pressure chamber 251 and the service brake pressure chamber 256 from each other. The flange 255 is made of metal. The flange 255 is adapted to receive the diaphragm 253. The diaphragm 253 may be pushed via the piston plate by the spring towards the flange 255. The diaphragm 253 is adapted to separate the service brake non-pressure chamber 252 from the service brake pressure chamber 256.

Figure 3 shows a sectional view of a spring brake actuator 250 according to an embodiment of the disclosure. The spring brake actuator 250 of Figure 3 is a spring brake actuator 250 for a pneumatic braking system 210 of a vehicle 200a, 200b. Such a pneumatic braking system 210 and such a vehicle 200a, 200b are described with reference to Figure 1. Figure 3 is described under reference to Figure 1.

The spring brake actuator 250 of Figure 2 comprises a parking brake pressure chamber 251, a service brake non-pressure chamber 252, a service brake pressure chamber 256, a diaphragm 253, a piston pipe 254, a pushrod 257, a cylinder assembly 150 and a divider arrangement 100.

The spring brake actuator 250 may receive pressurized air in the service brake pressure chamber 256 via the piston pipe 254, wherein the piston pipe 254 is arranged in the parking brake pressure chamber 251. The pressurized air deflects the diaphragm 253 and a piston plate which is connected to the pushrod 257 and thus deflects the pushrod 257. The pushrod 257 is arranged in the service brake non-pressure chamber 252 and is deflected against a force of a spring (not indicated).

The diaphragm 253 may be pushed by the spring towards the divider arrangement 100. The diaphragm 253 is adapted to separate the service brake non-pressure chamber 252 from the service brake pressure chamber 256.

The cylinder assembly 150 comprises the divider arrangement 110 and a cylinder 160 for a defining the parking brake pressure chamber 251. The piston pipe 254 is arranged inside the cylinder 160. The cylinder 160 comprises an annular shape with a base surface, an opening and a lateral surface between the base surface and the opening. The divider arrangement 110 is inserted through the opening and fixatedly arranged in the cylinder 160. The divider arrangement 110 is arranged within the cylinder 160 for receiving the diaphragm 253 and for dividing the parking brake pressure chamber 251 and the service brake pressure chamber 256 from each other.

The cylinder assembly 150 and the divider arrangement 100 are further described with reference to Figures 4 to 7.

Figure 4 shows a sectional view of a cylinder assembly 150 according to an embodiment of the disclosure. The cylinder assembly 150 of Figure 4 is the cylinder assembly 150 as described with reference to Figure 3. Figure 4 is described under reference to Figures 1 and 3.

The cylinder assembly 150 comprises the divider arrangement 110 and a cylinder 160 for a defining the parking brake pressure chamber 251 as described with reference to Figure 3. Further, the cylinder assembly 150 comprises two sealings 161. The sealings 161 are circumferentially arranged around the divider arrangement 100. The sealings 161 are arranged between the divider arrangement 100 and the lateral surface of the cylinder 160. The sealings 160 enable a sealing of the parking brake pressure chamber 251. The sealings 160 are arranged parallel to each other.

The cylinder assembly 150 comprises a plurality of screws 170, one of which is shown in the Figures. The divider arrangement 100 is fixated to the cylinder 160 by the screws 170.

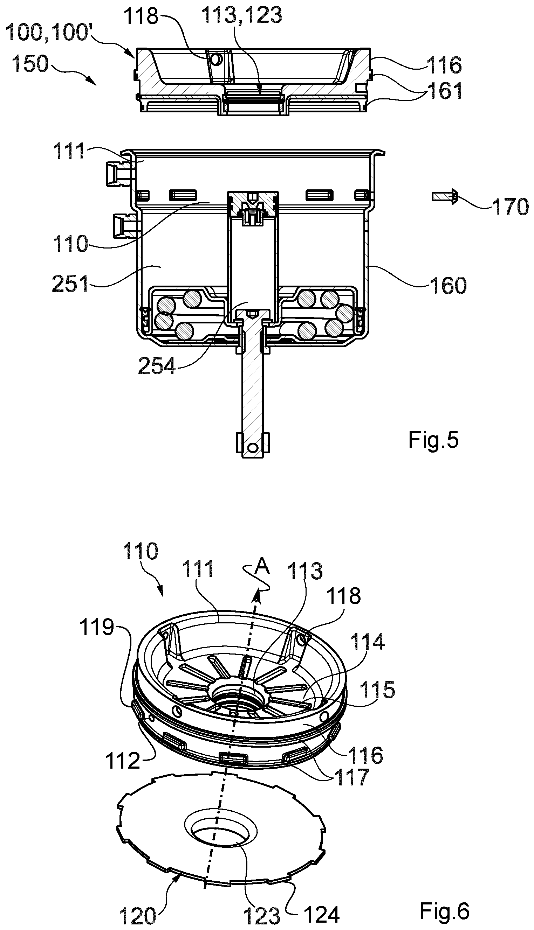

Figure 5 shows a sectional exploded view of a cylinder assembly 150 according to an embodiment of the disclosure. The cylinder assembly 150 of Figure 5 is the cylinder assembly 150 as described with reference to Figures 3 and 4. Figure 5 is an alternative illustration of the cylinder assembly 150.

Figure 6 shows a perspective view of each of a divider 110 and a support member 120 of a divider arrangement 100 according to an embodiment of the disclosure. The divider arrangement 100 of Figure 6 is the divider arrangement 100 as shown in Figures 3 to 5. Figure 6 is described under reference to Figures 1 and 3 to 5.

The divider arrangement 100 comprises an annular shaped divider 110 and a support member 120.

The divider 110 is adapted to receive the diaphragm 253 and to divide the parking brake pressure chamber 251 and the service brake pressure chamber 256 from each other. The divider 110 comprises a contact surface 114 for contacting the diaphragm 253. The divider 110 comprises a circumferentially arranged collar 111 and a through hole 113. The diaphragm 253 may also contact the collar 111. An outer surface of the collar 111 provides a circumferential and axially extended contact surface for contacting the cylinder 160. The through hole 113 is centrally arranged and enables an insertion of the piston pipe 254. The contact surface 110 is radially extended from the through hole 113 to the collar 111. The contact surface 110 is arranged between the through hole 113 to the collar 111.

The divider 110 is made of plastics, for example polypropylene and/or another thermoplastic polymer.

The divider arrangement 100, i.e., each of the divider 110 and the support member 120, defines an axial direction A. The axial direction A is defined by the annular shape the divider arrangement 100, the divider 110 and the support member 120. Each of the divider 110 and the support member 120 comprises a through hole 113, 123 centrally arranged with respect to the axis A and for inserting a piston pipe 254. The through hole 113 of the divider 110 and the through hole 123 of the support member 120 are aligned with each other. Each of the through hole 113 of the divider 110 and the through hole 123 of the support member 120 is centrally arranged with respect to the axial direction A.

The collar 111 comprises a plurality of circumferentially arranged fastening holes 112 for fastening the divider 110 to a cylinder 160. The fastening holes 112 may be blind holes. The fasting holes 112 may comprise an inner thread.

The divider 110 comprises a plurality of alignment member 119 and the cylinder 160 comprises a plurality of second alignment members 162 (see Figure 5). The alignment members 119 are arranged and circumferentially distributed on a radially outwardly arranged lateral surface 116 of the divider 110. The second alignment members 162 are arranged and circumferentially distributed on lateral cylinder surface 163 of the cylinder 163. The distribution and/or size of the plurality of alignment member 119 and of the second alignment members 162 is adapted to enable that the arrangement of the divider 110 within the cylinder 160 may be locked.

The divider 110 comprises a plurality of lateral holes 118. The lateral holes 118 are arranged and circumferentially distributed on a radially outwardly arranged lateral surface 116 of the divider 110, in particular at the collar 111. The lateral holes 118 are through holes. The lateral holes 118 act as air inlet passages to the service brake pressure chamber 256. The circumferential distribution of the lateral holes 118 enables a homogeneously distributed inlet of air into the service brake pressure chamber 256. The size and number of the lateral holes 118 may be chosen to enable a sufficient flow of air.

The contact surface 114 of the divider 110 comprises a plurality of radially extended grooves 115. The radially extended grooves 115 are straight and each of the radially extended grooves 115 is radially oriented. The radially extended grooves 115 are distributed on the contact surface 114.

The divider 110 two circumferentially arranged lateral grooves 117 at the lateral surface 116 for receiving the sealings 161.

The support member 120 is made of sheet metal. The support member 120 is made of steel. I.e., the divider arrangement 100 is a steel reinforced plastic divider.

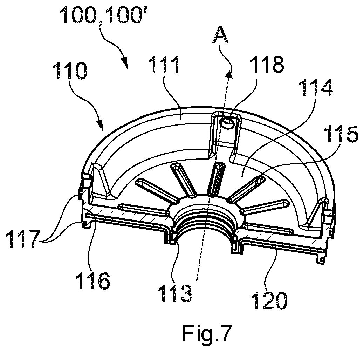

Fig. 7 shows a sectional view of a divider arrangement 100 according to an embodiment of the disclosure. The divider arrangement 100 of Figure 7 is the divider arrangement 100 as shown in Figures 3 to 6. Figure 7 is described under reference to Figures 1 and 3 to 6.

The support member 120 is arranged and adapted to mechanically and/or structurally support the divider 110. The support member 120 is arranged inside the divider 110. I.e., the divider 110 and the support member 120 are radially aligned and the support member 120 is arranged, in the axial direction A, between a first section of the divider 110 and between a second section of the divider 110. The divider 110 and the support member 120 for a sandwich structure. The divider arrangement 100 is an overmolded arrangement 100'. The plastic divider 110 is molded over the support member 120.

### List of reference signs (Part of the description)

- 100: divider arrangement
- 100': overmolded arrangement
- 110: divider
- 111: collar
- 112: fastening hole
- 113: through hole
- 114: contact surface
- 115: groove
- 116: lateral surface
- 117: lateral groove
- 118: lateral hole
- 119: first alignment member

- 120: support member
- 123: through hole
- 124: second alignment member

- 160: cylinder
- 161: sealing
- 162: second alignment member
- 163: lateral cylinder surface

- 200a: vehicle
- 200b: utility vehicle

- 210: pneumatic braking system

- 250: spring brake actuator
- 251: parking brake pressure chamber
- 252: service brake non-pressure chamber
- 253: diaphragm
- 254: piston pipe
- 255: flange
- 256: service brake pressure chamber
- 257: pushrod

- A: axial direction

## Claims

1. Divider arrangement (100) for a spring brake actuator (250) for a pneumatic braking system (210) for a vehicle (200a), in particular utility vehicle (200b); wherein the spring brake actuator (250) comprises a parking brake pressure chamber (251), a service brake non-pressure chamber (252), a service brake pressure chamber (256) and a diaphragm (253) to separate the service brake non-pressure chamber (252) from the service brake pressure chamber (256);
- the divider arrangement (100) comprises an annular shaped divider (110) and a support member (120);
- the divider (110) is adapted to receive the diaphragm (253) and to divide the parking brake pressure chamber (251) and the service brake pressure chamber (256) from each other;
- the divider (110) is made of plastics; and
- the support member (120) is arranged and adapted to mechanically and/or structurally support the divider (110).

2. Divider arrangement (100) as claimed in claim 1, wherein the support member (120) is at least partially arranged inside the divider (110) and/or the divider arrangement (100) is an overmolded arrangement (100').

3. Divider arrangement (100) as claimed in claim 1 or 2, wherein
- the divider arrangement (100) defines an axial direction (A); and
- each of the divider (110) and the support member (120) comprises a through hole (113, 123) centrally arranged with respect to the axis (A) and for inserting a piston pipe (254).

4. Divider arrangement (100) as claimed in any one of the preceding claims, wherein
- the divider (110) comprises a circumferentially arranged collar (111); and
- the collar (111) comprises a plurality of circumferentially arranged fastening holes (112) for fastening the divider (110) to a cylinder (160).

5. Divider arrangement (100) as claimed in any one of the preceding claims, wherein the support member (120) is made of sheet metal.

6. Divider arrangement (100) as claimed in any one of the preceding claims, wherein
- the divider (110) comprises a contact surface (114) for contacting the diaphragm (253) with a plurality of radially extended grooves (115); and/or
- the divider (110) comprises a lateral surface (116) with at least one circumferentially arranged lateral groove (117) for receiving a sealing (161).

7. Cylinder assembly (150) for a spring brake actuator (250) for a pneumatic braking system (210) of a vehicle (200a), in particular utility vehicle (200b); wherein the spring brake actuator (250) comprises a parking brake pressure chamber (251), a service brake non-pressure chamber (252), a service brake pressure chamber (256) and a diaphragm (253) to separate the service brake non-pressure chamber (252) from the service brake pressure chamber (256);
- the cylinder assembly (150) comprises the divider arrangement (110) as claimed in any one of the preceding claims and a cylinder (160) for a defining the parking brake pressure chamber (251); and
- the divider arrangement (110) is arranged within the cylinder (160) for receiving the diaphragm (253) and for dividing the parking brake pressure chamber (251) and the service brake pressure chamber (256) from each other.

8. Spring brake actuator (250) for a pneumatic braking system (210) of a vehicle (200a), in particular utility vehicle (200b), wherein the spring brake actuator (250) comprises a parking brake pressure chamber (251), a service brake non-pressure chamber (252), a service brake pressure chamber (256), a diaphragm (253) to separate the service brake non-pressure chamber (252) from the service brake pressure chamber (256), and the divider arrangement (100) as claimed in any one of the claims 1 to 6 and/or the cylinder assembly (150) as claimed in claim 7.

9. Pneumatic braking system (210) for a vehicle (200a), in particular utility vehicle (200b), wherein the pneumatic braking system (210) comprises the spring brake actuator (250) as claimed in claim 8, the cylinder assembly (150) as claimed in claim 7 and/or the divider arrangement (100) as claimed in any one of the claims 1 to 6.

10. Vehicle (200a), in particular utility vehicle (200b), wherein the vehicle (200a), in particular utility vehicle (200b), comprises the pneumatic braking system (210) as claimed in claim 9, the spring brake actuator (250) as claimed in claim 8, the cylinder assembly (150) as claimed in claim 7 and/or the divider arrangement (100) as claimed in any one of claims 1 to 6.
